# EUROPEAN PATENT APPLICATION

(11) **EP 2 857 607 A1**
(43) Date of publication of application: **08.04.2015**
(21) Application number: 13186936.4
(22) Date of filing: 01.10.2013
(51) Int. Cl.: E04C 5/07, B29C 70/50

(54) **FRP reinforcing bar**

(71) Applicant: Latvijas Universitates agentura "Latvijas Universitates Polimeru mehanikas Instituts", 1006 Riga (LV)
(72) Inventor: Portnovs, Georgijs, LV-3001 Jelgava (LV); Arnautovs, Aleksandrs, LV-1039 Riga (LV)
(74) Representative: Anohins, Vladimirs

(57) **Abstract**

An FRP reinforcing bar (10) for strengthening of concrete structures comprising a core (12), containing reinforcing fibers (14) oriented along the bar length, and plurality of longitudinal ribs (16) located on the surface of core (12), wherein the ribs (16), are made simultaneously with the core as a single whole in a common pultrusion process, and periodical transversal cutouts (20) are made in the ribs (16).

## Description

### Technical Field

The present invention relates to FRP (Fiber Reinforced Plastic) reinforcing bars for strengthening of concrete structural members in construction industry.

### Background Art

FRP reinforcing bars have several advantages over conventional steel bars, namely corrosion resistance, high tensile strength, low specific gravity, fatigue resistance, nonmagnetic electrical insulation, small creep deformation. As a result, FRP bars have been introduced as reinforcement for a variety of concrete structures subjected to aggressive environments such as chemical and wastewater treatment plants, marine structures, and bridge decks in cold climates where chloride-based de-icing agents are used. FRP reinforcing bars have been used also in magnetic resonance imaging facilities, an aircraft station compass calibration pad, tunnel boring operations, chemical plants, electrical substations, and highway barriers.

The geometry of both the bar itself and its surface are the main factors that define at least two mechanisms of bonding-i.e., friction and mechanical interlock between the bar and concrete. Increase of mechanical interlock between any FRP reinforcing bar and concrete is achieved by formation of irregularities on the surface of the reinforcing bar.

For example, in US5362542, a groove is impressed on the surface of a pultruded bar. During the impression undersurface reinforcing fibers are bent, which causes loss of composite longitudinal tensile strength. In addition, the impression must be conducted prior to the final cure of the polymer matrix. Therefore, the modification of standard pultrusion equipment is needed. Besides, the depth of grooves made by this method is limited and therefore their filling with coarse aggregate concrete becomes difficult.

In US5725954, a pultruded ribbed bar, prior to its final cure, is twisted along its axis and the ribs are aligned spirally along the bar. Realization of this operation also needs a special equipment. Twisting of the bar leads to loss of linearity of longitudinal reinforcing fibers and reduction of bar tensile strength. As the tilt of spiral ribs is limited then the achieved mechanical interlock between the ribs and concrete is limited also.

In US2008/302063, a spiral grooves are cut out in a round FRP reinforcing. However, the cutting of fibers reacting the longitudinal load decreases the tensile load bearing capacity of the bar. The inexpediency of removal of the large quantities of expensive load-bearing fibers in waste leads to limitation of grooves depth. Little depth makes difficult, as was noted above, the filling of groves with coarse aggregate concrete.

Thus, there is a need for a FRP reinforcing bar in which the increase of mechanical bond between the bar and concrete is achieved without loss of the load-carrying capability of the bar.

### Summary of invention

The problem of increasing the mechanical bond between the bar and concrete without the loss of the bar load-carrying capability is solved by the FRP reinforcing bar according to claim 1. The proposed FRP bar comprises a core with reinforcing longitudinal fibers and longitudinal ribs located on the core outer surface, the ribs having periodical transversal cutouts.

In that way, the proposed reinforcing FRP bar consists of two integrally formed parts performing different functions. The first part is a solid bearing core, resisting axial and bending loads in a reinforced concrete. The second part is formed by longitudinal ribs, transmitting the main load from the concrete to the bar by means of shear stresses at the interfaces between the ribs and the solid core. The ribs provide a mechanical bond between the concrete and the core. This is achieved by slotting, for example, by means of turning or disk grinding, of periodical cutouts in the longitudinal ribs. The cutouts are filed with a concrete mix during the concrete product formation. Slipping of the bar, when subjected to loadings, can start only after shearing rib projections or shearing the concrete between the rib projections.

Shearing of the projection of a composite rib when puling-out the bar can occur on the surface which area per unit length is much less than the corresponding area of shear failure in the concrete between the rib projections. At the same time, the strength of the composite in interlaminar shear significantly exceeds the shear strength of the concrete. This makes possible to use the suggested composite bar for reinforcing concretes with low strength.

The bar with longitudinal ribs is made by pultrusion in one step but materials of the ribs and bearing core can be made of different composites, for example, the core of CFRP but the ribs of GFRP or glass fiber mat. This allows to spend expensive high-strength fibers more rationally.

The depths of the cutouts in the ribs can be much deeper than that of the cutouts made by circumferential turning in the cylindrical bars, because the volume of extracting material is smaller and it may be less expensive than the core material.

The cutouts in the ribs have some advantages over the ring cutouts for their filling with concrete. Cutouts in the ribs are opened in three ways and therefore are filled better, especially when coarse aggregate concrete is used.

The length of the cutouts in the ribs may follow the strength of the concrete (the weaker is concrete, the longer must be the cutouts). Mechanical equipment for making cutouts is not complicated and may be easily retargeted. The length of the cutouts can be varied along the bar. They can be made only at the ends of reinforcing bars and fulfill the function of an end anchor. At the other part of the bar the bonding can have adhesional and frictional nature. For example, it can be covered with small particles sprayed on the layer of resin.

Contact points between the concrete and ends of the rib projections do not form an uninterrupted surface as in the case of hoop or spiral grooves and are separated from each other with a concrete layer. This decreases the danger of stress concentration at contact points leading to cracking and premature failure of concrete. The cutouts in neighboring ribs could be shifted to each other, which additionally decreases the danger of stress concentration in the concrete. Increasing of the distance between the projections in neighboring ribs prevents them from failing simultaneously, which increases the structure reliability.

Frictional bonding after shearing of projections is superior to a plain reinforcing bar because of appearance of failed concrete and resin debris on the contact surfaces.

Availability of sufficiently deep projections on the bar surface facilitates design and installation of an anchor for the bar ends fixation and loading in prestressed structures. For example, cutouts in the ribs can be made along a screw line and an anchor can be threaded on the bar. So, a load for pretension of reinforcing bar will be transmitted through such a peculiar screw joint.

### Definitions

**Pultrusion -** an automated, continuous process for manufacturing FRP bars having a constant cross-section. Roving and other reinforcements are saturated with resin and continuously pulled through a heated die, where the pat is formed and cured. The cure part is then cut to length.

**Longitudinal rib -** a rib extending along the bar length.

**Cutout in the rib -** is a deletion of a segment of the rib, which deletion goes to the all rib height and which length is at least one rib width.

### Brief description of drawings

Fig. 1 shows a general view of the reinforcing bar.
Fig. 2 shows a general view of the reinforcing bar blank after pultrusion.
Fig. 3 A and B shows a side and face plane view of the bar.
Fig. 4 A and B shows a side and face plane view of the bar used in the experiment.
Fig. 5 shows a dependence of the bar end slipping on the applied load.

### Description of embodiments

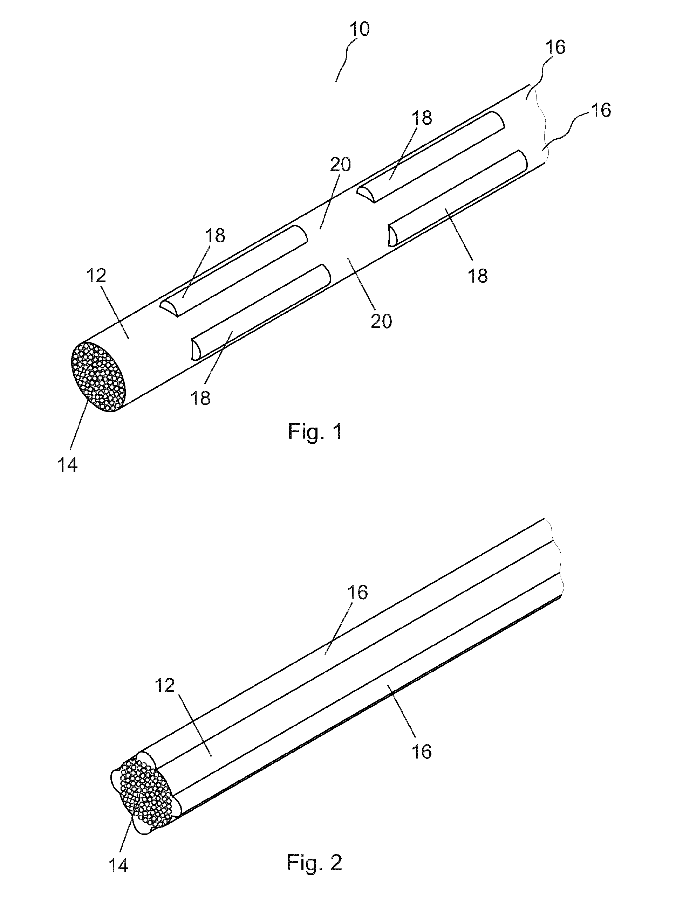

One of the possible embodiments of a reinforcing bar according to the present invention is shown in Fig. 1. This bar is made of a fiber composite. As a matrix for the composite bar material various polymers can be used: thermoplasts - polyolefins, aliphatic and aromatic polyamides, fluoroplastics and others, thermosetting plastics - phenoplasts, aminoplasts, epoxy, polyester, organosilicon and others plastic binders, but as reinforcing fibers, glass, carbon, aramid and basalt fibers can be used. As shown in Fig. 1, a bar 10 consists of a core 12 and four ribs 16 made with the same polymer binder, whereas the fibers used in the core and ribs can be different. The bar 10 is made by pultrusion.

In short, the pultrusion process of making the bar consists in the following. Fiber yarns from the bobbins are gathered to the unidirectional bundle. They can be joined with stripes of mat, made earlier of the chaotically located fibers. The formed bundle is passed through the bath with a polymer binder and then is pulled through the die where it is compressed and takes its form; the excess binder is squeezed in the process. The quality of this technological process is defined, mainly, by a correct selection of material quantity and its correct placement in the die. It must fully fill the die and each of the material components must take its place in the cross-section of the die, which shape corresponds to a required profile of the bar produced. The die is equipped with a heating device whereof the bar gets out fully cured and then is cut into pieces of a required length.

With this technology one can obtain a bar consisting of the core 12 and a plurality of longitudinal ribs 16 integral with the core 12, as shown in Fig. 2.

Making of transversal cutouts 20 in the ribs 16 can be fulfilled at once after the exit of the bar 10 from the heating chamber or after its sawing into pieces of a required length.

The cutouts 20 are made by mechanical deletion of the rib's part of definite length by means of turning or grinding the rib 16 up to the surface of the core 20. This operation does not require a very complicated equipment, a lathe or grinding machine with a high velocity of rotation may be used. The cutouts 20 can be formed simultaneously in neighboring ribs 16 during the moving of the tool tip along the hoop trajectory or can be cut in each separated rib 16 in turn by reciprocating motion of a grinding wheel. In the last case, the height of the ribs 16 and their placement should be appropriately chosen to avoid cutting of neighboring ribs 16. The most productive method is undercutting by a lathe tool or grinding wheel along a spiral trajectory under continuous relative displacement of the turning bar 10 and the cutter. In this case, the cutouts 20 in neighboring ribs 16 will be shifted in accordance with the pitch of the cut spiral.

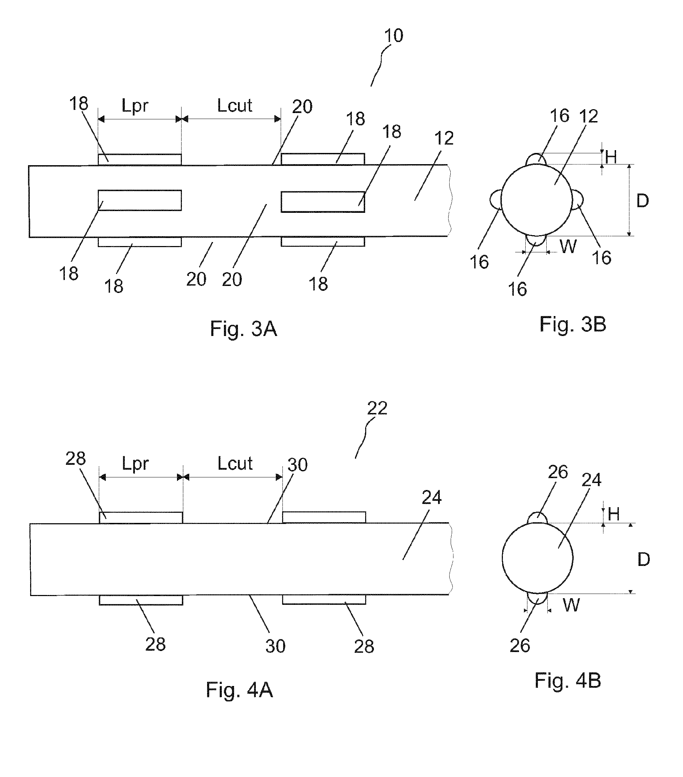

Dimensions of the reinforcing bar 10 are chosen from practical considerations. The dimensions are shown in Fig. 3. So, for example, the range of bar diameters D may be defined as 8 ÷ 30 mm. Reinforcing bars of larger diameters are rarely used. Making of ribs and especially cutouts at the bars of smaller diameters is difficult.

The number of ribs 16 may be equal to two and more, an optimal number being considered as 4-8. At a larger number the cutting of each rib 16 separately is difficult, the grinding wheel will necessarily touch the neighboring ribs 16. When undercutting by a lathe, the number of ribs 16 may be increased, but it is inexpediently to locate them too close to each other because a failure started in one place can be extended on the regions of neighboring ribs 16.

The ratio H/D of the rib height (H) to the diameter (D) of the core may be varied, depending on the number of ribs 16, within the limits of 0.05÷0.40. The width of the rib base (W) also depends on the number of ribs 16 and the diameter of the core 12 and is commensurable with the height of the rib 16.

All ribs can have similar dimensions or alternatively the ribs can be made of different dimensions, for example every second rig may be made higher or wider. Thus the resulting bond between the bar and concrete may vary along the bar circumference.

The ratio of the cutout length L_{cut} in the rib 16 to the rib height H is varied within the limits L_{cut}/H = 1÷10. The ratio of rib projection length Lₚᵣ to the length of cutout L_{cut} may be varied within the range Lₚᵣ/L_{cut}=0.2÷1. This ratio depends on the shear strength of bar material and concrete. It is desirable that the rib projection 18 and concrete between projections 18 are failed simultaneously then the bearing capacity of both components will be fully used.

### Experimental data

The bond strength between concrete and the proposed FRP reinforcing bar was investigated. This strength was determined by "pull-out" tests in accordance with ACI 440.3R-04 standard. Bars were made by pultrusion and composed of unidirectional E-glass fibers and polyester matrix. Ribs and core of the bar were made of the same material. Strength of composite in tension was equal to 600 MPa. Dimensions and shape of the bar were chosen on the basis of available pultrusion equipment.

A bar used in experiments is shown in Fig. 4. The bar 22 consisted of cylindrical part or core 24 with a diameter of 13 mm and two longitudinal ribs 26 having a shape near to a semicircle with a radius of 3 mm and curvings in the points of crossing with the circle of the core 24. The girth of the outer surface of the bar was 47 mm. The bar 22 was embedded in the concrete at a depth of 140 mm in all tests.

The dependence of a bond strength between the concrete and the reinforcing bar on the lengths of projections and cutouts in the ribs was investigated keeping the height of cutouts constant (equal to 3 mm).

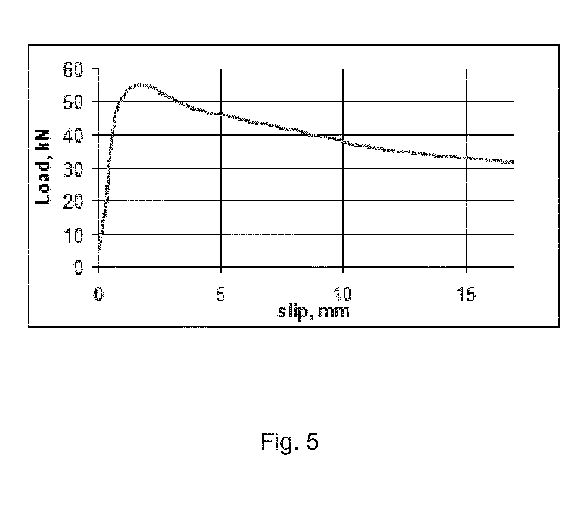

A typical dependence of slipping of the unloaded end of the bar embedded in the concrete on the load applied to the other end is shown in Fig.5. As may be seen, a significant part of the bond is kept after an attainment of the maximum load.

A nominal bond strength between the reinforcing bar and concrete, achieved in the tests, is shown Table 1. It was calculated through the division of the maximum load, achieved during a pull-out of the bar from the concrete, by full area of the outer surface of the bar part, embedded in the concrete.

Two types of concrete were used in "pull-out" tests with their compression strengths of 20 MPa and 30 MPa. The maximum value of the bond strength between the bar and more strong concrete was 10.8 MPa at the length of cutout *L_{cut}* =6 mm, length of projection *Lₚᵣ* =6 mm and height of cutout *H* = 3mm. The minimal value of a nominal bond strength during "pull-out" tests of FRP reinforcing bars, advisable by ACI 440.6-08 standard, equals to 9.65 MPa.

During "pull-out" tests the concrete matrix was failed in shear, when concrete with strength 20 MPa was used. In tests with a stronger concrete, the reinforcing bar was mainly failed in tension by itself. It should be noted, that in the case that reinforcing bar fails during the test, the value of the bond strength *τ*ₘₐₓ, presented in the Table 1, is understated because at the maximum load used for a nominal bond strength calculation, the failure of the bond between the bar and concrete was not yet started.

**Table 1**

| Length of the cut *L_{cut}, mm* | Length of the rib projection *Lₚᵣ, mm* | Load *P*ₘₐₓ, kN | Bond strength *τ*ₘₐₓ, MPa | Number of tests | Fracture mode |
|---|---|---|---|---|---|
| 0 | 140 | 27 | 4.1 | 3 | Shear of concrete |
| 3 | 3 | 27.9 | 4.2 | 3 | Shear of concrete |
| 3 | 6 | 33.9 | 5.4 | 3 | Shear of concrete |
| 3 | 9 | 37.6 | 6.4 | 3 | Shear of concrete |
| 3 | 12 | 33.4 | 5.4 | 3 | Shear of concrete |
| 3 | 15 | 39.6 | 6 | 3 | Shear of concrete |
| 9 | 3 | 29.8 | 4.5 | 3 | Shear of concrete |
| 9 | 9 | 55 | 8.3 | 3 | Shear of concrete |
| 9 | 12 | 61.7 | 9.4 | 3 | Failure of the rebar from the tensile stress |
| 6 | 3 | 71.4* | 10.8* | 1 | Failure of the rebar from the tensile stress |
| 6 | 6 | 58.2* | 8.8* | 1 | Failure of the rebar from the tensile stress |
| 6 | 12 | 66.9* | 10.2* | 1 | Failure of the rebar from the tensile stress |
| 3 | 3 | 45.8* | 7.0* | 1 | Shear of concrete |
| 3 | 6 | 48.5* | 7.4* | 1 | Shear of concrete |
| 3 | 9 | 51.2* | 7.8* | 1 | Shear of concrete |
| 3 | 12 | 50.6* | 7.7* | 1 | Shear of concrete |
| total | | | | 34 | |

| | | | | | |
|---|---|---|---|---|---|
| * - concrete strength - 30 MPa ; without the asterisk - concrete strength -20MPa | | | | | |

So, the tests have shown that even when using only a minimal number of ribs and not strongest materials, the suggested type of the reinforcing bar has a sufficiently great bond strength with concrete. Increase of the number of ribs with transversal cutouts will result in a significant rise of this strength.

### Reference signs list

10. a bar
12. a core
14. longitudinal fibers
16. a rib
18. a projection on the rib
20. a cutout in the rib
22. a bar
24. a core
26. a rib
28. a projection on the rib
30. a cutout in the rib

## Claims

1. An FRP reinforcing bar (10) for concrete structures comprising:
a core (12) containing reinforcing fibers (14) oriented along the bar (10), and
a plurality of longitudinal ribs (16) located on the surface of the core (12), at that the ribs (16) being made simultaneously with the core (12) as a single whole in a common pultrusion process, and
transversal cutouts (20) are made in the ribs (16).

2. The FRP reinforcing bar (10) as claimed in claim 1, wherein the core (12) has a circular cross-section.

3. The FRP reinforcing bar (10) as claimed in claim 1, wherein the height of the ribs (16) is 5-40% of the diameter (D) of the core (12).

4. The FRP reinforcing bar (10) as claimed in claim 1, wherein the length (L_{cut}) of the cutouts (20) is no less than the height (H) of the rib (16).

5. The FRP reinforcing bar (10) as claimed in claim 1, wherein the length of a projection (Lₚᵣ) between neighboring cutouts (20) is no less than the height (H) of the rib (16).

6. The FRP reinforcing bar (10) as claimed in claim 2, wherein the diameter (D) of the core (13) is 8-30mm.

7. The FRP reinforcing bar (10) as claimed in claim 1, comprising from 2 to 12 ribs (16).

8. The FRP reinforcing bar (10) as claimed in claim 7, comprising 4-8 ribs (16).

9. The FRP reinforcing bar (10) as claimed in claim 1, comprising a second fiber reinforcement in an external part of the core (12) and in the ribs (16), that second reinforcement being different from the reinforcing fibers (14) oriented along the bar (10).

10. The FRP reinforcing bar (10) as claimed in claim 9, wherein the second reinforcement is a fiber mat.

11. A method of making an FRP reinforcing bar (10) comprising the following steps:
a) making by way ofpultrusion of FRP bar (10) comprising a core (12) containing reinforcing fibers (14) oriented along the bar (10) and a plurality of longitudinal ribs (16) located on the surface of the core (12);
b) cutting off parts of the rib (16) generating in the ribs (16) periodically located transversal cutouts (20).

12. The method as claimed in claim 11 wherein the pultruded bar (10) comprises a second fiber reinforcement in an external part of the core (12) and in the ribs (16), that second reinforcement being different from the reinforcing fibers (14) oriented along the bar (10).

13. The method as claimed in claim 11 wherein the second fiber reinforcement is a fiber mat.

14. The method as claimed in claim 11, wherein the cutting off the parts of the rib (16) is effected by way of grinding.

15. The method as claimed in claim 11, wherein the cutting of the rib (16) parts is effected by way of milling.
